# EUROPEAN PATENT SPECIFICATION

(11) **EP 2 979 920 B1**
(45) Date of publication and mention of the grant of the patent: **22.03.2017**
(21) Application number: 15179194.4
(22) Date of filing: 30.07.2015
(51) Int. Cl.: B60N 2/28

(54) **ELECTRONIC DEVICE TO IMPROVE SAFETY OF CHILD PROTECTION SYSTEMS FOR CAR SEATS**
ELEKTRONISCHES GERÄT ZUR VERBESSERUNG DER SICHERHEIT VON KINDERSCHUTZSYSTEMEN FÜR KRAFTFAHRZEUGE
DISPOSITIF ELECTRONIQUE D'AMELIORATION DE LA SECURITE DES SYSTEMES DE PROTECTION ENFANTS POUR VEHICULES

(30) Priority: 01.08.2014 IT TO20140614
(43) Date of publication of application: 03.02.2016
(73) Proprietor: Speziani, Daniele, 10125 Torino (IT)
(72) Inventor: Speziani, Daniele, 10125 Torino (IT)
(74) Representative: Bruni, Giovanni

(56) References cited:
- WO-A2-2008/063999
- DE-A1- 10 058 978
- FR-A1- 2 864 482
- US-A1- 2004 164 856
- US-A1- 2005 030 188
- US-A1- 2005 280 297
- US-A1- 2014 253 314
- US-B1- 6 419 199

## Description

The present invention relates to an innovative electronic device that diagnoses the proper installation of child protection systems, particularly for car seats in vehicles for children transport.

As known, the technical sector is that of the safety devices and specifically we are in the field of child protection systems that are mounted inside of cars. The new ECE-R129 (Phase I) predicts that the safety systems for children used on cars are equipped with a system called "ISOfix". This system is internationally standardized and provides the most secure, easy and fast way to properly install a child seat in the car without using the seat belts. The name ISOfix derives from ISO (International Standardization Organization) and FIX (Fixation). To secure the seat directly to the car body, the ISOfix system uses two anchorages located on the seat base and a third anchoring point, called anti-rotation device, designed to prevent any rotational movement, which can be: a "Top tether" belt or a " supporting leg". The ISOfix seat anchorages must be attached to ISOfix hooks integrated into the vehicle and located between the seatback and the seat base: thus a rigid connection between the seat and the car frame is created. Since 2006, all new cars are equipped with ISOfix anchorages and "Top tether" anchor point. ISOfix anchorages are also present on a large number of cars produced before 2006.

Therefore, there is the need to warn user that the child safety device is not properly installed on the car and that, as a consequence, safety qualities could be compromised.

In general, systems, which present solutions to said technical problem and that are able to provide an alarm signal when the seat is not positioned in the correct way on a car, are known in the art, see, for example, FR 2 864 482 A1, disclosing a mechanical grip device for a child seat comprising a support leg connected to a part of the child seat and supported on a floor pan of a vehicle to avoid rotation of the child seat in a collision situation, whereby the leg has an identification unit for identifying a relative position of arms of the leg with respect to an outer tube to ensure contact between the base of the arms and the floor pan; otherwise, visual means will warn the user installing the child seat.

The device according to the present invention, which is defined by the technical features set forth in claim 1, is steadily fixed to the body of the child seat and its aim is to control the two anchorages of the ISOfix installation and the anti-rotation system both at first installation and during the whole life of the vehicle seat, to ensure greater safety.

The law currently in force provides that one of the two devices is used, then the invention may be applied to the following configurations:
a. Anchor points (Isofix) and a first anti-rotation device (supporting leg);
b. Anchor points (Isofix) and a second anti-rotation device (top-thether). Furthermore, child seats can also be provided with a couple of anchorages between the base (having the ISOfix anchorages) and the child seat itself. As an alternative, between the ISOfix base and the child seat, a tilting mechanism can be provided, such mechanism allowing rotations of the seat with respect to the base (e.g. to change the seat from front to rear position or to rotate the seat 90°, facilitating the positioning of the child on the seat).

The device according to an embodiment of the present invention is powered by a battery that has a duration that exceeds the life cycle of the product on which it is applied, and uses visual and acustic signals to warn the user when an improper or dangerous installation occurs.

Different embodiments of the invention will now be described, by means of examples, with reference to the attached drawings in which:

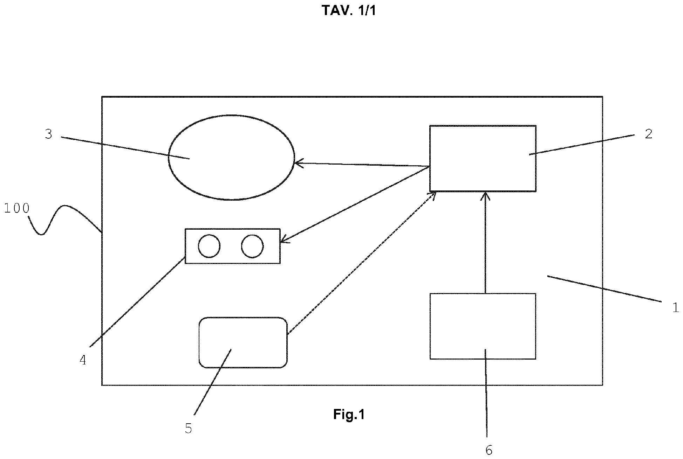

- Figure 1 is a plan view of the device according to a preferred embodiment of the present invention.

The device 100, as shown in Figure 1, comprises an electronic card 1 SMD (Side Mounted Device) technology comprising the following elements:
- a microcontroller 2 (MCU: Micro Control Unit);
- buzzer or other acoustic signal means 3;
- LED or other visual signal means 4;
- feeding battery (coin battery) or other type of battery AAA or AA (also rechargeable) 5;
- non-mechanical sensor means 6, for example optical, magnetic or with Hall effect, integrated into the card, or connected by means of a cable having at least three electrical conductors, for the detection of the right ISOfix device anchorage and the "anti-rotation" device.

A first embodiment of the present invention provides a device 100 comprising an electronic card 1 comprising a microcontroller 2, acoustic signal means 3, for example a buzzer, visual signaling means 4, for example one or more LEDs, sensor means 6, and a feeding battery 5.
The electronic card 1 has reduced dimensions ranging up to a maximum of 15mm x 25 mm.

The battery 5 feeds both the microcontroller 2 and the sensors 6, both acoustic signal means 3 and visual signal means 4, as shown in Figure 1 (dashed lines).
Said device 100, being provided with a microcontroller 2 can be programmed, to minimize energy consumption and thus extend the operational life from at least 6 years up to a theoretical maximum of 11 years. Said feature titles the device 100 as: "device that does not require the replacement of battery during its life ", even if special installations may however require a replacement of the same. Said goal is achieved using the "sleep" mode of the microcontroller 2: once executed a security check program, the microprocessor goes directly in sleeping state ("Sleep") and remains in this state for a time between a minimum of few fractions of a second, such as 0.1 seconds progressively up to a maximum of 8 seconds. Since the "sleep" mode of 8 seconds can be detected by the user as a lack of device response, the microcontroller 2 utilizes a capacitive technology (based on the electric field variation of a conductor when it comes in proximity to or in contact with another conductor) for exiting from the "sleep" mode and answering to an "interrupt", caused by the user contact with a specific portion of the plastic body of the seat, the sensitive one which is directly connected to the system.

This efficiency is achieved pasting a conductor in the inner part of the plastic shell of the child protection system, typically a sheet of thin aluminum, connected to a specific microcontroller terminal. A user contact will modify the total electric capacity of the functional group aluminum sheet - plastic shell - body of the user.

If a dangerous condition occurs, a visual and acoustic signals are activated and, when this condition is prolonged in time, visual and acoustic signals are first repeated at regular intervals of time, then the time intervals become longer until signals stop and finally signals restart when a condition of proximity or contact is detected.

In a preferred embodiment of the invention there is a button (mechanical or capacitive) that activates, on demand, a "system check" program that:
- checks the correct seat fastening;
- checks the battery charge state;
- controls
the buzzer operating state (a sound is emitted for the operational check).

The sensors 6 are connected to the microcontroller 2 and are powered only during the "active" phase of the microcontroller, therefore saving energy.

The acoustic signal device 3 emits a bi-tonal sound that can be easily interpreted as a danger signal.

The visual signal device 4 uses a color coding of easy interpretation: green if everything is ok (i.e., both the seat and the device 100 are properly working) and red for danger.

The device 100 is capable of detecting an incorrect installation condition of the child protection system based on the following principle: the standard ISOfix anchorage, in its mechanical construction, has a metal appendix located in the rear portion that is used to detach the anchorage. The movement of this appendix is of about 3mm. On this appendix is fixed a permanent magnet, whose 3 mm movement acts as "trigger" for the sensor, for example, a Hall effect sensor.

The device 100, according to the present invention, or its sensors 6 will be installed on a plastic component. Normally, said components are affected by rather important dimensional defects (they can be of the order of millimeters). For this reason, a Hall-effect magnetic sensor or a magneto-resistive sensor or an optical sensor has been integrated.

Each of these sensors can provide an "on"/"off" answer or a continuing response (which will be managed in an appropriate manner through one of the analogic channels of the microcontroller).

The different sensor types may be used to form a device having peculiar characteristics or optimization costs or optimization installation space.

Other than the embodiments of the invention, as above disclosed, it is to be understood that a vast number of variations exist. It should also be appreciated that the exemplary embodiment or exemplary embodiments are only examples and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment if not thereby departing from the scope of the invention as set forth in the appended claims.

## Claims

1. Electronic device (100) configured to check for correct installation of anchorages and "anti-rotation" points of child protection systems, the device (100) comprising an electronic card (1) comprising a microcontroller (2), acoustic signal means (3), visual signal means (4), at least one feeding battery (5), sensor means (6), said device (100) being configured
- to detect a condition of incorrect installation of the children protection system that occurs in case of relative displacement between an appendage, that controls the release of one of the anchor points, and one of said sensor means (6).
- to activate said acoustic signal means (3) and visual signal means (4).

2. Device (100) according to claim 1 configured to check for correct installation of a couple of anchorages between the base and the child seat.

3. Device (100) according to claim 1 configured to check for correct installation of a tilting mechanism provided between the base and the child seat.

4. Device (100) according to any of the preceding claims, wherein said microcontroller (2) is configured to enter in a sleep mode, once executed the control, said sleep mode progressively increases from 0,1 seconds to 8 seconds.

5. Device (100) according to claim 4, wherein said microcontroller (2) is configured to interrupt the sleep mode when there is a contact between the user and a specific part of the body seat.

6. Device (100) according to any of the preceding claims, wherein said microcontroller (2) is configured to activate, once a danger condition is revealed, a visual and acoustic signal and, in case this condition is extended in time, the visual and acoustic signal is repeated at progressively longer time intervals, until the signal is entirely stopped.

7. Device (100) according to any of the preceding claims, further comprising a button configured to activate, upon request, a diagnosis program system.

8. Device (100) according to any of the preceding claims, where said sensor means (6) are integrated in said electronic card (1), or connected by a cable to at least three electrical conductors.

9. Device (100) according to any of the preceding claims, wherein said battery (5) feeds all of microcontroller (2), sensors (6), bells (3) and visual (4) signals.

10. Device (100) according to claim 8, wherein said electronic card (1) has a maximum size of 15 mm x 25 mm.

11. Device (100) according to any of the preceding claims, wherein said acoustic signal means (3) emit a bi-tonal sound and said visual signal means (4) use, as color coding, the green color if everything is ok and the red color in danger conditions.

## Patentansprüche

1. Elektronisches Gerät (100), konfiguriert um eine korrekte Installation von Verankerungen und Punkten von "Gegen-Drehung" von Kinderschutzsystemen zu überprüfen, wobei die Vorrichtung (100) eine elektronische Karte (1) aufweist, die einem Mikrocontroller (2), akustische Signalmittel (3), visuelle Signalmittel (4), mindestens eine Zuführbatterie (5), Sensormittel (6) umfasst, wobei die Vorrichtung (100) derart konfiguriert, dass sie
- eine Bedingung einer falschen Installation des Kinderschutzsystem erfasst, die im Falle von einer relativen Verschiebung zwischen einem Anhängsel, das die Freisetzung von einem der Ankerpunkte steuert, und einem der besagten Sensormittel (6), erfolgt,
- die besagten akustische Signalmittel (3) und visuelle Signalmittel (4) aktiviert.

2. Gerät (100) nach Anspruch 1, derart konfiguriert, um die korrekte Installation von einem Paar Verankerungen zwischen der Basis und dem Kindersitz zu überprüfen.

3. Gerät (100) nach Anspruch 1, derart konfiguriert, um die korrekte Installation eines kippbaren zwischen der Basis und dem Kindersitz vorgesehenen Mechanismus zu überprüfen.

4. Gerät (100) nach einem der vorhergehenden Ansprüche, wobei der besagte Mikrocontroller (2) derart konfiguriert ist, um in einen Schlafmodus einzutreten, wenn die Kontrolle ausgeführt worden ist, wobei der besagte Schlafmodus progressiv von 0,1 Sekunden bis 8 Sekunden steigt.

5. Gerät (100) nach Anspruch 4, wobei der besagte Mikrocontroller (2) derart konfiguriert ist, um in einen Schlafmodus einzutreten, wenn ein Kontakt zwischen dem Benutzer und einem spezifischen Teil des Körpersitzes besteht.

6. Gerät (100) nach einem der vorhergehenden Ansprüche, wobei der besagte Mikrocontroller (2) derart konfiguriert ist, um ein visuelles und akustisches Signal zu aktivieren, sobald eine Gefahrenbedingung erkannt wurde, und falls eine solche Bedingung in der Zeit verlängert wird, wird das visuelle und akustische Signal in fortschreitend längeren Zeitintervallen wiederholt, bis das Signal ganz gestoppt wird.

7. Gerät (100) nach einem der vorhergehenden Ansprüche, ferner umfassend eine Taste, die derart konfiguriert ist, um auf Anforderung ein Diagnoseprogrammsystem zu aktivieren.

8. Gerät (100) nach einem der vorhergehenden Ansprüche, wobei die besagte Sensoreinrichtung (6) in der besagten elektronischen Karte (1) integriert oder über einem Kabel mit zumindest drei elektrischen Leitern verbunden ist.

9. Gerät (100) nach einem der vorhergehenden Ansprüche, wobei die besagte Batterie (5) die Gesamtheit von Mikrocontroller (2), Sensoren (6), Glocken (3) und visuellen Signalen (4), speist.

10. Gerät (100) nach Anspruch 8, wobei die besagte elektronische Karte (1) eine maximale Größe von 15 mm x 25 mm aufweist.

11. Gerät (100) nach einem der vorhergehenden Ansprüche, wobei die besagte akustische Signaleinrichtung (3) einen zweitonalen Klang emittiert und die besagte visuelle Signaleinrichtung (4) als eine Farbcodierung die grüne Farbe wenn alles in Ordnung ist und die rote Farbe in Gefahrenbedingungen verwendet.

## Revendications

1. Dispositif électronique (100) configuré pour vérifier l'installation correcte d'ancrages et des points d' "anti-rotation" de systèmes de protection des enfants, le dispositif (100) comprenant une carte électronique (1) avec un microcontrôleur (2), des moyens de signal acoustiques (3), des moyens de signal visuels (4), au moins une batterie d'alimentation (5), des moyens capteurs (6), ledit dispositif (100) étant configuré
- pour détecter une condition d'installation incorrecte du système de protection des enfants qui se produit en cas de déplacement relatif entre un appendice, qui contrôle la libération d'un des points d'ancrage, et l'un desdits moyens capteurs (6),
- pour activer ledit moyen de signal acoustique (3) et ledit moyen de signal visuel (4).

2. Dispositif (100) selon la revendication 1 configuré pour vérifier l'installation correcte d'accouplement des ancrages entre la base et le siège enfant.

3. Dispositif (100) selon la revendication 1 configuré pour vérifier l'installation correcte d'un mécanisme d'inclination prévu entre la base et le siège enfant.

4. Dispositif (100) selon l'une quelconque des revendications précédentes, dans lequel ledit microcontrôleur (2) est configuré pour entrer dans une modalité de veille, une fois exécuté la commande, ladite modalité de veille augmentant progressivement entre 0,1 et 8 secondes.

5. Dispositif (100) selon la revendication 4, dans lequel ledit microcontrôleur (2) est configuré pour interrompre la modalité de veille quand il y a un contact entre l'utilisateur et une partie spécifique du siège du corps.

6. Dispositif (100) selon l' une quelconque des revendications précédentes, dans lequel ledit microcontrôleur (2) est configuré de manière à activer, une fois qu'une condition de danger est révélée, un signal visuel et acoustique et, dans le cas où cette condition est prolongée dans le temps, le signal visuel et acoustique est répété à des intervalles de temps progressivement plus longs, jusqu'à ce que le signal soit complètement arrêté.

7. Dispositif (100) selon l'une quelconque des revendications précédentes, comprenant en outre un bouton configuré pour activer, sur demande, un système de programme de diagnostic.

8. Dispositif (100) selon l'une quelconque des revendications précédentes, dans lequel lesdits moyens de détection (6) sont intégrés dans ladite carte électronique (1) ou reliés par un câble à au moins trois conducteurs électriques.

9. Dispositif (100) selon l'une quelconque des revendications précédentes, dans lequel ladite batterie (5) alimente l'ensemble du microcontrôleur (2), des capteurs (6), des cloches (3) et (4) des signaux visuels.

10. Dispositif (100) selon la revendication 8, dans lequel ladite carte électronique (1) a une taille maximale de 15 mm x 25 mm.

11. Dispositif (100) selon l'une quelconque des revendications précédentes, dans lequel lesdits moyens de signal acoustique (3) émettent un son bitonal et lesdits moyens de signal visuel (4) utilisent, comme un codage couleur, la couleur verte si tout est conforme et la couleur rouge en cas de danger.
